# EUROPEAN PATENT SPECIFICATION

(11) **EP 4 364 863 B1**
(45) Date of publication and mention of the grant of the patent: **28.01.2026**
(21) Application number: 23206399.0
(22) Date of filing: 27.10.2023
(51) Int. Cl.: B07C 5/36, B65G 57/04, B65G 59/08

(54) **APPLIANCE FOR SORTING MANUFACTURED ARTICLES**
VORRICHTUNG ZUM SORTIEREN VON HERGESTELLTEN ARTIKELN
APPAREIL DE TRI D'ARTICLES MANUFACTURÉS

(30) Priority: 03.11.2022 IT 202200022542
(43) Date of publication of application: 08.05.2024
(73) Proprietor: Siti - B&T Group S.p.A., 41043 Formigine (Modena) (IT)
(72) Inventor: TAROZZI, Fabio, 41043 Formigine (MO) (IT)
(74) Representative: Zoli, Filippo

(56) References cited:
- EP-A2- 0 077 304
- SE-A1- 2 030 327
- US-A- 5 427 252

## Description

### Technical Field

The present invention relates to an appliance for sorting manufactured articles.

### Background Art

It is well known that special appliances are used to sort manufactured articles of various type, separating them according to predetermined characteristics (size, color, shape...) and grouping them according to their uniformity to one or more of them.

With particular reference to the ceramics sector, such appliances are generally set up in packaging areas for manufactured articles of the type of tiles, slabs or the like, where the same access, one in line with the other, by running along dedicated arrival lines and output lines.

To fulfill their purpose, known appliances comprise sorting means which are arranged at the arrival line and are configured to grasp the manufactured articles being transported along the latter (e.g., by means of grippers or suction cup devices) and to transfer them, depending on one or more of the above predetermined characteristics, to respective temporary storage stations located laterally to the conveyor line.

In actual facts, the sorting means operate a selective collection of the manufactured articles and, by placing those of them sharing similar predetermined characteristics in the same storage stations, effectively determines their sorting.

So, through the action of the sorting means, the manufactured articles thus separated are gradually stacked on top of each other in the various storage stations to form stacks of structurally and/or aesthetically similar products intended for packaging.

That said, it is important to explain that the appliances belonging to the state of the art suffer from numerous drawbacks that make them amenable to refinement. First of all, it should be explained that in known appliances the arrival line and the output line are generally staggered in the lateral direction; however, this arrangement proves to be rather inconvenient as it results in considerable complications not only in the layout of the appliance itself but also in the connection between the latter and the machines arranged upstream and downstream thereof.

It is easy to appreciate that the aforementioned staggering is, among other things, frequently related to the increase in the size of the appliance and ends up, in this sense, making the deployment of the latter considerably more difficult and requiring a great amount of time and economic resources to be devoted to the purpose.

In addition to this fact, it is good to keep in mind that considerable overall dimensions make it possible to install known appliances only in the presence of spaces large enough to contain them, with the obvious and inconvenient consequence of severely limiting the adaptability and versatility of use of the appliances themselves.

Again, it is important to explain the fact that the staggering of the arrival line and of the output line greatly complicates the maintenance and replacement operations of the appliance components, requiring, for this purpose, large amounts of time and economic resources.

Another problem to be highlighted relates to the fact that such known appliances are often distinguished by somewhat inaccurate and imprecise operation and, for this reason, not infrequently results in damage and/or breakage of one or more of the manufactured articles handled thereby.

In addition, mention must also be made of the fact that known appliances are often inefficient in its operation and, precisely because of this, they severely reduce the company's production output.

Document EP-A-0 077 304 discloses an appliance sorting for manufactured articles, comprising:
- at least one base frame for the support on the ground;
- at least one arrival line associated with said base frame and defining a direction of arrival of the manufactured articles to be sorted;
- at least one receiving assembly of the manufactured articles
- at least one sorting assembly adapted to selectively transfer said manufactured articles to be sorted from said arrival line to said receiving assembly;
- at least one output line arranged below said arrival line and defining a direction of away movement of the sorted manufactured articles;
wherein said receiving assembly is adapted to transfer the manufactured articles onto said output line, wherein
- said arrival line and said output line are substantially vertically aligned with each other; and
- said receiving assembly comprises:
- at least one stacking structure defining an inclined direction of stacking and
- supporting means of said manufactured articles associated with said stacking structure in a movable manner along said direction of stacking between a raised position and a lowered position.

Document SE-A-2030327 discloses an appliance for sorting manufactured articles, comprising:
- at least one base frame for the support on the ground;
- at least one arrival line associated with said base frame and defining a direction of arrival of the manufactured articles to be sorted;
- at least one receiving assembly of the manufactured articles arranged laterally to said arrival line;
- at least one sorting assembly adapted to selectively grasp said manufactured articles to be sorted and to transfer them from said arrival line to said receiving assembly.

### Description of the Invention

The main aim of the present invention is to devise an appliance for sorting manufactured articles provided with a rational layout which allows, in particular, easy connection with the machines located upstream and downstream thereof. Within this main aim, the object of the present invention is to devise an appliance for sorting manufactured articles distinguished by small overall dimensions and, therefore, easy installation in both large spaces and confined spaces, resulting in savings of time and economic resources compared to the aforementioned prior art.

Another object of the present invention is to devise an appliance for sorting manufactured articles with high production output.

A further object of the present invention is to devise an appliance for sorting manufactured articles with accurate and precise operation which allows lowering the risk of damaging and breaking the manufactured articles.

Not the least object of the present invention is to devise an appliance for sorting manufactured articles in which the operations of replacement of its components can be done easily and cost-effectively.

Another object of the present invention is to devise an appliance for sorting manufactured articles which allows the aforementioned drawbacks of the prior art to be overcome within the framework of a simple, rational, easy and effective to use and cost-effective solution.

The above objects are achieved by this appliance for sorting manufactured articles having the characteristics of claim 1.

### Brief Description of the Drawings

Other characteristics and advantages of the present invention will become more apparent from the description of a preferred, but not exclusive, embodiment of an appliance for sorting manufactured articles, illustrated by way of an indicative, yet non-limiting example, in the accompanying tables of drawings in which:

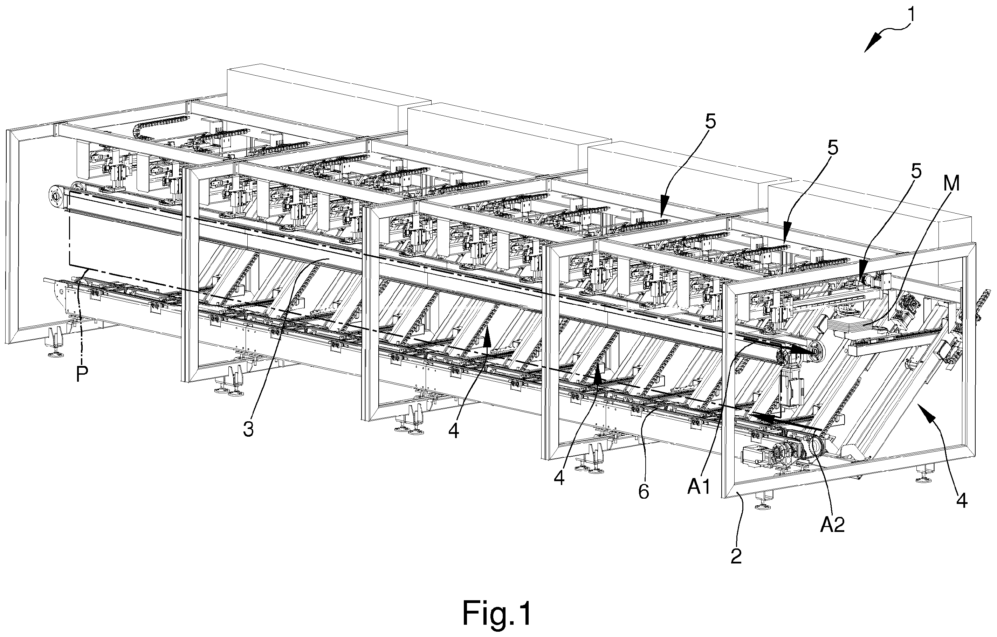

Figure 1 is an axonometric, overall view of the appliance according to the invention;
Figure 2 is an axonometric, detailed view of a portion of the appliance according to the invention;
Figures 3 to 6 show, in a sequence of lateral views, the operation of the appliance according to the invention.

### Embodiments of the Invention

With particular reference to these figures, reference numeral 1 globally denotes an appliance for sorting manufactured articles.

It is specified that, within the scope of this disclosure, the term "manufactured articles" preferably relates to slab-shaped semi-finished products made of ceramic material, particularly of the type of ceramic tiles.

It cannot, however, be ruled out that the same term may also be used to designate slab-shaped semi-finished products made of different materials, e.g. marble, stone or other materials still known to the expert in the field.

Having specified this, the appliance 1 for sorting manufactured articles comprises:
- at least one base frame 2 for the support on the ground;
- at least one arrival line 3 associated with the base frame 2 and defining a direction of arrival A1 of the manufactured articles M to be sorted;
- at least one receiving assembly 4 of the manufactured articles M arranged laterally to the arrival line 3;
- at least one sorting assembly 5 adapted to selectively grasp the manufactured articles M to be sorted and to transfer them from the arrival line 3 to the receiving assembly 4;
- at least one output line 6 arranged below the arrival line 3 and defining a direction of away movement A2 of the sorted manufactured articles M, the receiving assembly 4 being adapted to transfer the manufactured articles M onto the output line 6.

Beginning to detail the arrival line 3 and the output line 6, it is good to say, first of all, that they preferably consist of at least one (preferably two) motorized conveyor belts on which the manufactured articles M to be sorted and the sorted manufactured articles M are conveyed, respectively.

As mentioned, the arrival line 3 defines a direction of arrival A1, the latter being arranged substantially horizontally.

Similarly, the direction of away movement A2 defined by the output line 6 is also arranged substantially horizontally.

In actual facts, the direction of arrival A1 and the direction of away movement A2 are substantially parallel to each other.

The output line 6 can be conveniently connected to one or more stations where the sorted manufactured articles M can be directed, e.g. to one or more stations for packaging the same.

It is important to add that, according to the invention, the arrival line 3 and the output line 6 are substantially aligned vertically with each other.

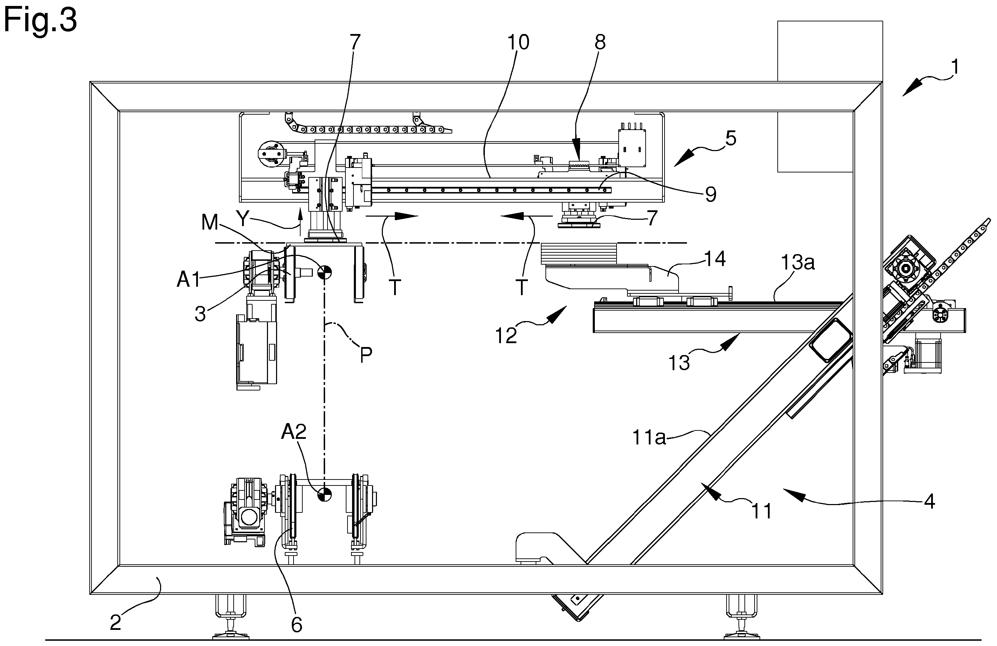

In other words, as visible in Figures 3 to 6, the direction of arrival A1 of the manufactured articles M to be sorted and the direction of away movement A2 of the sorted manufactured articles M belong to a common vertical lying plane P. It is specified, at this point, that this expedient makes it possible to fix a number of problems of the prior art complained of.

As a first step, the vertical alignment of the arrival line 3 to the output line 6 allows the layout of the appliance 1 to be optimized and, as a direct consequence, allows to be more easily connected to the machines located upstream and downstream thereof.

Secondly, such an expedient makes it possible to obtain an appliance 1 with limited overall dimensions and, therefore, easier to install than known appliances both in large spaces and confined spaces.

It is easy to appreciate how this fact makes it possible to obtain an appliance 1 which is particularly versatile and easily adaptable to a variety of different conditions of use.

Smaller overall dimensions are, among other things, also linked to a lower amount of time and resources required for the deployment of the appliance 1, with the advantageous consequence of having, for this purpose, a significantly lower expense than that required in the case of the state of the art.

Again, the fact of providing a vertically aligned arrival line 3 and output line 6 makes it easier and less costly to replace the components of the appliance 1 with respect to known appliances.

Beginning to describe the sorting assembly 5, it is specified that, as visible in the figures, the same is arranged above the arrival line 3.

Specifically, the sorting assembly 5 preferably comprises:
- at least two gripping elements 7 of the manufactured articles M to be sorted; and
- transfer means 8 of the gripping elements 7 adapted to move the latter alternately with each other between a gripping position and a release position (Figure 3).

Specifically, the displacement of the gripping elements 7 between the gripping position and the release position occurs along a horizontal direction of transfer T. Specifically, the direction of transfer T is transverse to the direction of arrival A1 and to the direction of away movement A2.

More specifically, the direction of transfer T is substantially orthogonal to the direction of arrival A1 and to the direction of away movement A2.

Regarding the aforementioned positions, in the gripping position, the gripping elements 7 are vertically aligned with the arrival line 3 and, therefore, are able to grasp the manufactured articles M to be sorted carried thereon.

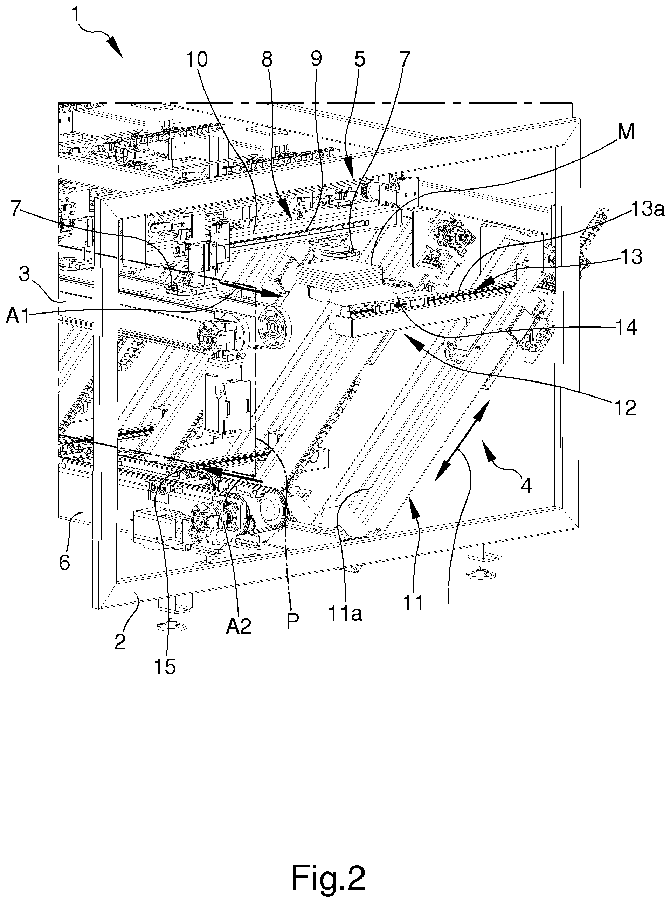

On the other hand, in the release position (which will be more fully described later in the disclosure) the gripping elements 7 are moved away from the arrival line 3 and placed where the sorting assembly 5 is located on which they release the previously grasped manufactured articles M (Figure 2).

In this regard, it is specified that the gripping elements 7 may have only one degree of freedom corresponding to the possibility of moving along the aforementioned direction of transfer T.

Alternatively, it is possible to make the sorting assembly 5 in such a way that the gripping elements 7 are also allowed to move along a substantially vertical direction.

Thus, in this case, the gripping elements 7 have two degrees of freedom corresponding to the possibility of the same to move along two mutually orthogonal directions.

In other words, the gripping elements 7 can be moved either horizontally along the direction of transfer T or vertically along an auxiliary direction Y, e.g., to promote the grasping and storing of the manufactured articles M on the arrival line 3 and on the receiving assembly 4, respectively (see Figure 2, where the different height at which the gripping elements 7 are positioned can be seen, and Figure 3).

In all cases, the alternating movement of the gripping elements 7 results in that, as one of them moves away from the arrival line 3 (and, thus, moves close to the receiving assembly 4), the other of them moves close to the arrival line 3 (and, thus, moves away from the receiving assembly 4).

In other words, as one gripping element 7 moves from the gripping position to the release position, the other gripping element 7 moves from the release position to the gripping position.

In this way, i.e., by providing gripping elements 7 contextually and alternately movable between the release and gripping positions, it is clearly possible to make an appliance 1 distinguished by high production output.

Further describing the gripping elements 7 it is possible to add that they can work by suction and be, in this sense, of the type of suction cups or similar devices. The possibility cannot however be ruled out of providing gripping elements 7 of different types, e.g. of the type of mechanical grippers or of other types still known to the branch technician.

Conveniently, the transfer means 8 comprise at least two rails 9 arranged along the direction of transfer T.

Specifically, each gripping element 7 is associated with a respective rail 9 in a sliding manner between the gripping position and the release position.

In this regard and as visible in the figures, the sorting assembly 5 comprises at least one holding crossbeam 10 associated with the base frame 2 and with which the rails 9 are associated.

In the present case, the rails 9 and, with them, the respective gripping elements 7 are placed on the holding crossbeam 10 in opposite positions to each other.

As well as the rails 9, the holding crossbeam 10 also extends substantially parallel to the direction of transfer T.

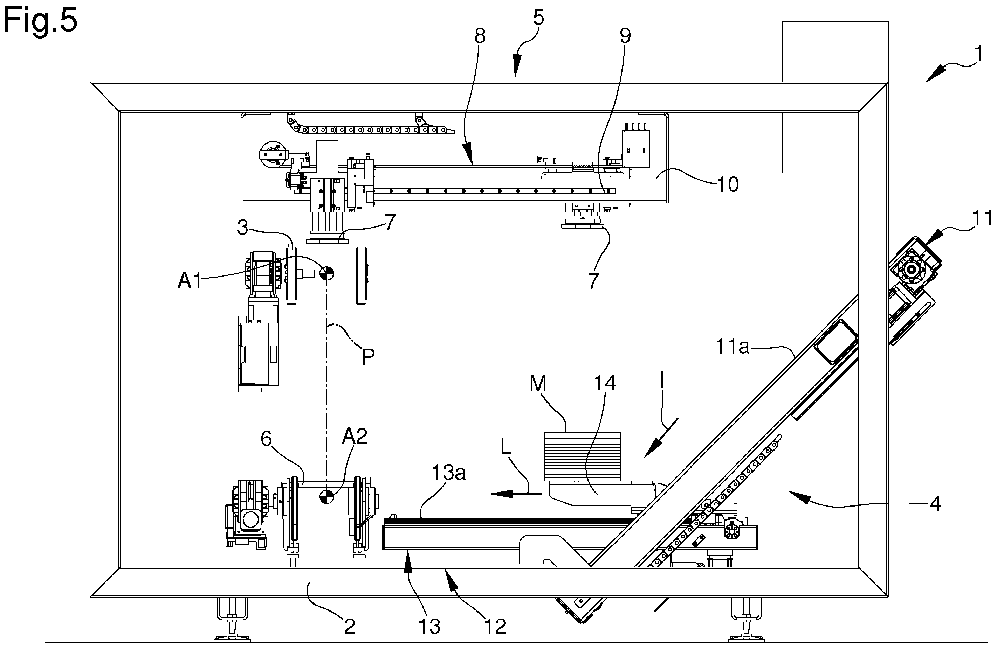

According to the invention, the receiving assembly 4 comprises:
- at least one stacking structure 11 defining an inclined direction of stacking I; and
- supporting means 12 of the manufactured articles M associated with the stacking structure 11 in a movable manner along the direction of stacking I between a raised position and a lowered position (the latter shown in Figure 5).

As visible in the figures, the stacking structure 11 has a substantially elongated conformation.

In this case, the stacking structure 11 defines a respective first guide 11a developing along the direction of stacking I and wherein the supporting means 12 slide between the raised position and the lowered position.

Again, the stacking structure 11 is developed, from top to bottom, close to the arrival line 3 and to the output line 6.

Even more specifically, the direction of stacking I is transverse to the lying plane P.

In actual facts, the direction of stacking I is skewed with respect to the direction of arrival A1 and to the direction of away movement A2.

Conveniently, the arrival line 3 is arranged substantially at the same height occupied by the supporting means 12 in the raised position.

Similarly, the output line 6 is arranged substantially at the same height occupied by the holding element 14 in the lowered position.

This means that the supporting means 12 move, along the direction of stacking I, between two boundary heights; one, wherein the supporting means 12 are aligned with the arrival line 3 (i.e., the raised position), and the other, wherein the supporting means 12 are aligned with the output line 6 (i.e., the lowered position). More particularly, the lowered position and the raised position correspond to the end-of-stroke positions of the supporting means 12 along the direction of stacking I.

Specifically, in the raised position, the supporting means 12 are devoid of the manufactured articles M to support.

As more and more manufactured articles M are stacked on the supporting means 12, the latter are progressively lowered with respect to the raised position.

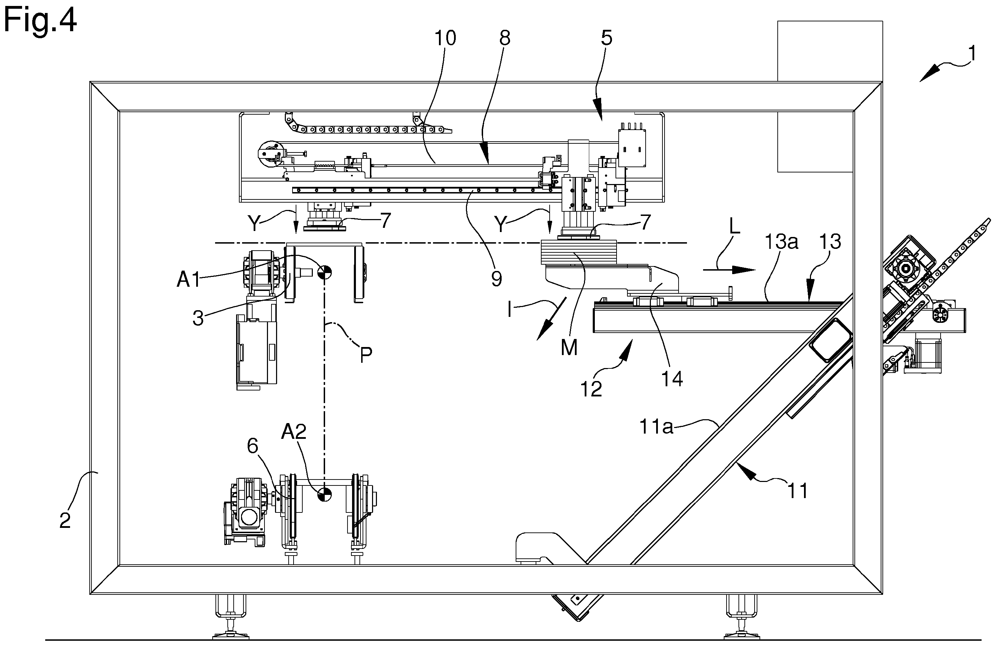

In particular, the lowering of the supporting means 12 is such that the last manufactured article M to be added to the stack is always released at the same height regardless of the height of the stack itself (compare Figures 3 and 4 in this regard).

Once the desired amount of manufactured articles M has been stacked on the supporting means 12, the latter are further lowered along the direction of stacking I and brought, thus, to the lowered position.

This means that when the maximum number of manufactured articles M stacked on the supporting means 12 has been reached, the latter are not yet in the lowered position, but in an intermediate position located between the raised position and the lowered position itself.

In actual facts, the desired number of manufactured articles M to be stacked on the supporting means 12 is reached when the latter are arranged at a height comprised between the arrival line 3 and the output line 6.

Thanks to this methodology of work and, specifically, to the progressive and gradual lowering of the supporting means 12, the manufactured articles M taken from the arrival line 3 can be arranged on the supporting means themselves in a totally safe manner, i.e., preventing their detachment from the gripping elements 7 from causing them to be damaged or broken due to falling onto the stacks of manufactured articles M that have already been sorted.

So, once stored in the various receiving assemblies 4, the manufactured articles M thus sorted create stacks of structurally and/or aesthetically similar products that can be sent for packaging.

Describing the supporting means 12 in more detail, it is good to say that they comprise:
- at least one supporting base 13 associated with the stacking structure 11 in a movable manner along the direction of stacking I; and
- at least one holding element 14 intended to receive and support the manufactured articles M and locked together with the supporting base 13 along the direction of stacking I.

In particular, the supporting base 13 has an elongated conformation and develops in a direction substantially parallel to the direction of transfer T.

In actual facts, the supporting base 13 and the holding crossbeam 10 are arranged parallel to each other.

The supporting base 13 is inserted into the first guide 11a and is therefore sliding, within the latter, between the raised position and the lowered position.

It is specified at this point that, in the release position the gripping elements 7 are vertically aligned with the respective holding element 14.

This means that, as visible in the figures, the gripping elements 7 are moved horizontally between a position of vertical alignment with the arrival line 3 (i.e., the gripping position) and a position of vertical alignment with the holding element 14 (i.e., the release position).

It is important to explain, in addition, that the holding element 14 is movable, with respect to the supporting base 13, along a substantially horizontal direction of work L.

In actual facts, the holding element 14 has two degrees of freedom corresponding to the ability to move along two directions transverse to each other, one corresponding to the direction of stacking I and the other corresponding to the direction of work L.

As both are horizontal, the direction of work L is substantially parallel to the direction of transfer T.

In this sense, the rails 9 on the holding crossbeam 10 are arranged substantially parallel to the direction of work L.

Preferably, the supporting base 13 comprises at least a respective second guide 13a developed parallel to the direction of work L and with which the holding element 14 is associated in a sliding manner.

In the present case, the holding element 14 is adapted to displace, along the direction of work L and, therefore, along the second guide 13a, away from the output line 6 during the displacement of the supporting base 13 along the direction of stacking I from the raised position towards the lowered position. Specifically, at the raised position the holding element 14 is arranged in an extended position wherein it is at greater distance from the stacking structure 11 along the direction of work L.

As the manufactured articles M are stacked on the supporting means 12 and the supporting base 13 moves to the lowered position, the holding element 14 is moved progressively from the aforementioned extended position to a retracted position wherein it is at a shorter distance from the stacking structure 11 along the direction of work L.

In detail, the holding element 14 reaches the above retracted position when it is in the intermediate position, that is, in the position, comprised between the raised position and the lowered position, wherein the holding element 14 is located when the last manufactured article M of the stack is stored thereon.

It is specified that the technical expedient of providing a horizontally movable holding element 14 allows the manufactured articles M to be arranged resting on the latter in such a way as to make a substantially vertical stack.

Precisely, the fact that the holding element 14 recedes close to the stacking structure 11 as more and more manufactured articles M are stacked on the supporting means 12 allows the holding element 14 to reduce its height while keeping its horizontal position substantially unchanged.

As mentioned above, this expedient allows the manufactured articles M to be stacked on the holding element 14 in such a way that they make vertical stacks, which benefits the safety and efficiency of their sorting.

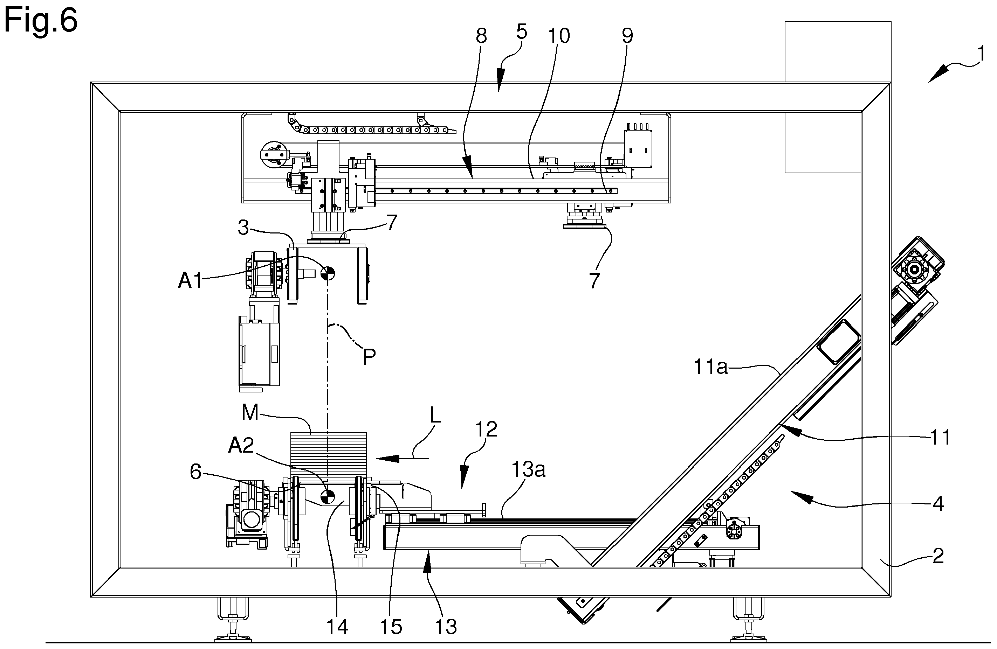

It is also added that the holding element 14 is movable along the direction of work L to at least one storage position of the manufactured articles M, wherein it protrudes from the supporting base 13 (see, in this regard, Figure 6). Specifically, the storage position is placed at the same height as the lowered position.

Therefore, once the lowered position has been reached, the holding element 14 can be moved along the direction of work L so as to reach the aforementioned storage position.

In particular, the holding element 14 in the storage position overlaps at least partly with the output line 6, thus allowing the release on the latter of the stack of manufactured articles M held by it and the consequent away movement of the stack itself.

In the present case, to enable this operation to be carried out correctly, the output line 6 comprises at least one interrupted stretch 15 arranged at the receiving assembly 4 and adapted to allow the holding element 14 to be inserted into the output line itself (see Figures 2 and 6).

In this sense, arranging the holding element 14 in the storage position implies that the same crosses the interrupted stretch 15 and, therefore, to insert itself into the output line 6, thus allowing the stack of manufactured articles M held by it to be unloaded onto the output line and to be conveyed, e.g., towards the aforementioned packaging station.

It is specified at this point that the appliance 1 preferably comprises a plurality of sorting assemblies 5 and a plurality of receiving assemblies 4 arranged in succession to each other along the direction of arrival A1.

In this sense, the appliance 1 also comprises a plurality of interrupted stretches 15, each arranged at a respective receiving assembly 4.

The sorting assemblies 5 are thus arranged, parallel to each other, at respective stretches of the arrival line 3, and each sorting assembly 5 is operationally connected to a respective receiving assembly 4 arranged at the same stretch.

In actual facts, the sorting assemblies 5 are aligned with each other laterally to the arrival line 3.

In this sense, it should be pointed out, for the sake of clarity, that each of the sorting assemblies 5 picks up the manufactured articles M carried on the arrival line 3 and transfers them to the respective receiving assembly 4 (the one, that is, associated with the same stretch of the arrival line 3) depending on whether or not they have a special predetermined characteristic related to, e.g., aesthetic finish, color, shape, weight, size or other sorting parameters still.

Each manufactured article M is substantially grasped by a special sorting assembly 5 and stored in the respective receiving assembly 4 depending on its own technical and/or aesthetic peculiarities, so that in each receiving assembly 4 come manufactured articles M sharing similar predetermined characteristics.

It is clear that providing a plurality of sorting assemblies 5 and a corresponding plurality of receiving assemblies 4 allows more manufactured articles M to be sorted in the same amount of time, thus increasing the production output of the appliance 1 even more than known appliances.

It has in practice been ascertained that the described invention achieves the intended objects.

In particular, the fact is emphasized that vertically aligning the arrival line with the output line makes it possible to optimize the layout of the appliance according to the invention and to allow, as a direct consequence, easier connection of the same with the machines located upstream and downstream thereof.

In addition, this very fact makes it possible to significantly reduce the overall dimensions of the appliance according to the invention compared to the aforementioned state of the art and, therefore, to install it even in the presence of reduced space.

It should be noted, then, that the receiving assembly of the appliance according to the invention allows, due to its special structure and peculiar operation, to effectively and safely stack the manufactured articles stored therein by the sorting assembly, i.e., averting the risk of damage and/or breakage of one or more of the latter.

In this regard, the fact that the stacking direction of the manufactured articles is arranged obliquely makes it possible to achieve the aforementioned advantages by reducing, the size of the stacking structure being equal, the overall dimensions of the appliance even more drastically.

## Claims

1. Appliance (1) for sorting manufactured articles, comprising:
- at least one base frame (2) for the support on the ground;
- at least one arrival line (3) associated with said base frame (2) and defining a direction of arrival (A1) of the manufactured articles (M) to be sorted;
- at least one receiving assembly (4) of the manufactured articles (M) arranged laterally to said arrival line (3);
- at least one sorting assembly (5) adapted to selectively grasp said manufactured articles (M) to be sorted and to transfer them from said arrival line (3) to said receiving assembly (4);
- at least one output line (6) arranged below said arrival line (3) and defining a direction of away movement (A2) of the sorted manufactured articles (M);
wherein said receiving assembly (4) is adapted to transfer the manufactured articles (M) onto said output line (6);
wherein:
- said arrival line (3) and said output line (6) are substantially vertically aligned with each other; and by the fact that
- said receiving assembly (4) comprises:
- at least one stacking structure (11) defining an inclined direction of stacking (I); and
- supporting means (12) of said manufactured articles (M) associated with said stacking structure (11) in a movable manner along said direction of stacking (I) between a raised position and a lowered position.

2. Appliance (1) according to claim 1, **characterized by** the fact that said arrival line (3) is substantially arranged at the same height occupied by said supporting means (12) in said raised position and by the fact that said output line (6) is substantially arranged at the same height occupied by said supporting means (12) in said lowered position.

3. Appliance (1) according to one or more of the preceding claims, **characterized by** the fact that said stacking structure (11) is developed, from top to bottom, close to said arrival and output lines (3, 6).

4. Appliance (1) according to one or more of the preceding claims, **characterized by** the fact that said direction of arrival (A1) and said direction of away movement (A2) belong to a vertical lying plane (P) and by the fact that said direction of stacking (I) is transverse to said lying plane (P).

5. Appliance (1) according to one or more of the preceding claims, **characterized by** the fact that said supporting means (12) comprise:
- at least one supporting base (13) associated with said stacking structure (11) in a movable manner along said direction of stacking (I); and
- at least one holding element (14) intended to receive and support said manufactured articles (M) and locked together with said supporting base (13) along said direction of stacking (I).

6. Appliance (1) according to claim 5, **characterized by** the fact that said holding element (14) is movable with respect to said supporting base (13) along a substantially horizontal direction of work (L).

7. Appliance (1) according to claim 6, **characterized by** the fact that said holding element (14) is adapted to move, along said direction of work (L), away from said output line (6) during the movement of said holding element (14) along said direction of stacking (I) from the raised position towards the lowered position.

8. Appliance (1) according to claim 6 or 7, **characterized by** the fact that said holding element (14) is movable along said direction of work (L) in at least one release position, wherein it protrudes from said supporting base (13), with the latter in the lowered position, overlapping at least partly with said output line (6).

9. Appliance (1) according to one or more of the preceding claims, **characterized by** the fact that said sorting assembly (5) comprises:
- at least two gripping elements (7) of the manufactured articles (M) to be sorted; and
- transfer means (8) of said gripping elements (7) adapted to move the latter alternately with each other between a gripping position, wherein they are aligned vertically to said arrival line (3), and a release position, wherein they are aligned vertically with said holding element (14).

10. Appliance (1) according to claim 9, **characterized by** the fact said transfer means (8) comprise at least two rails (9) arranged substantially parallel to said direction of work (L), each of said gripping elements (7) being associated with a respective rail (9) in a sliding manner between said gripping position and said release position.

11. Appliance (1) according to one or more of the preceding claims, **characterized by** the fact that it comprises a plurality of said sorting assemblies (5) and a plurality of said receiving assemblies (4) arranged in succession to each other along said direction of arrival (A1).

## Patentansprüche

1. Vorrichtung (1) zum Sortieren von gefertigten Artikeln, umfassend:
- mindestens einen Grundrahmen (2) zur Abstützung auf dem Boden;
- mindestens eine Ankunftslinie (3), die mit dem Grundrahmen (2) verbunden ist und eine Ankunftsrichtung (A1) der zu sortierenden gefertigten Artikel (M) definiert;
- mindestens eine Aufnahmeanordnung (4) für die gefertigten Artikel (M), die seitlich zu der Ankunftslinie (3) angeordnet ist;
- mindestens eine Sortieranordnung (5), die ausgebildet ist, die zu sortierenden gefertigten Artikel (M) selektiv zu greifen und sie von der Ankunftslinie (3) zu der Aufnahmeanordnung (4) zu befördern;
- mindestens eine Ausgabelinie (6), die unterhalb der Ankunftslinie (3) angeordnet ist und eine Wegbewegungsrichtung (A2) der sortierten gefertigten Artikel (M) definiert;
wobei die Aufnahmeanordnung (4) ausgebildet ist, die gefertigten Artikel (M) auf die Ausgabelinie (6) zu befördern;
wobei:
- die Ankunftslinie (3) und die Ausgabelinie (6) im Wesentlichen vertikal zueinander ausgerichtet sind; und dadurch, dass
- die Aufnahmeanordnung (4) umfasst:
- mindestens eine Stapelstruktur (11), die eine geneigte Stapelrichtung (I) definiert; und
- Stützmittel (12) für die gefertigten Artikel (M), die mit der Stapelstruktur (11) verbunden sind und entlang der Stapelrichtung (I) zwischen einer angehobenen Position und einer abgesenkten Position beweglich sind.

2. Vorrichtung (1) nach Anspruch 1, **dadurch gekennzeichnet, dass** die Ankunftslinie (3) im Wesentlichen auf der gleichen Höhe angeordnet ist wie die Stützmittel (12) in der angehobenen Position und dass die Ausgabelinie (6) im Wesentlichen auf der gleichen Höhe angeordnet ist wie die Stützmittel (12) in der abgesenkten Position.

3. Vorrichtung (1) nach einem oder mehreren der vorstehenden Ansprüche, **dadurch gekennzeichnet, dass** die Stapelstruktur (11) von oben nach unten nahe den Ankunfts- und Ausgabelinien (3, 6) ausgebildet ist.

4. Vorrichtung (1) nach einem oder mehreren der vorhergehenden Ansprüche, **dadurch gekennzeichnet, dass** die Ankunftsrichtung (A1) und die Wegbewegungsrichtung (A2) zu einer vertikalen liegenden Ebene (P) gehören und dass die Stapelrichtung (I) quer zu der liegenden Ebene (P) verläuft.

5. Vorrichtung (1) nach einem oder mehreren der vorhergehenden Ansprüche, **dadurch gekennzeichnet, dass** die Stützmittel (12) umfassen:
- mindestens eine Stützbasis (13), die mit der Stapelstruktur (11) in einer entlang der Stapelrichtung (I) beweglichen Weise verbunden ist; und
- mindestens ein Halteelement (14), das ausgebildet ist, die gefertigten Artikel (M) aufzunehmen und zu stützen, und das entlang der Stapelrichtung (I) mit der Stützbasis (13) verriegelt ist.

6. Vorrichtung (1) nach Anspruch 5, **dadurch gekennzeichnet, dass** das Halteelement (14) in Bezug auf die Stützbasis (13) entlang einer im Wesentlichen horizontalen Arbeitsrichtung (L) beweglich ist.

7. Vorrichtung (1) nach Anspruch 6, **dadurch gekennzeichnet, dass** das Halteelement (14) ausgebildet ist, sich während der Bewegung des Halteelements (14) entlang der Stapelrichtung (I) von der angehobenen Position in Richtung der abgesenkten Position entlang der Arbeitsrichtung (L) von der Ausgabelinie (6) wegbewegt.

8. Vorrichtung (1) nach Anspruch 6 oder 7, **dadurch gekennzeichnet, dass** das Halteelement (14) entlang der Arbeitsrichtung (L) in mindestens eine Freigabeposition bewegbar ist, in der es aus der Stützbasis (13) herausragt, wobei sich letztere in der abgesenkten Position befindet, und mindestens teilweise die Ausgabelinie (6) überlappt.

9. Vorrichtung (1) nach einem oder mehreren der vorhergehenden Ansprüche, **dadurch gekennzeichnet, dass** die Sortieranordnung (5) umfasst:
- mindestens zwei Greifelemente (7) für die zu sortierenden gefertigten Artikel (M); und
- Beförderungsmittel (8) der Greifelemente (7), die ausgebildet sind, letztere einander abwechselnd zwischen einer Greifposition, in der sie vertikal zu der Ankunftslinie (3) ausgerichtet sind, und einer Freigabeposition zu bewegen, in der sie vertikal zu dem Halteelement (14) ausgerichtet sind.

10. Vorrichtung (1) nach Anspruch 9, **dadurch gekennzeichnet, dass** die Beförderungsmittel (8) mindestens zwei Schienen (9) umfassen, die im Wesentlichen parallel zu der Arbeitsrichtung (L) angeordnet sind, wobei jedes der Greifelemente (7) mit einer jeweiligen Schiene (9) in einer gleitenden Weise zwischen der Greifposition und der Freigabeposition verbunden ist.

11. Vorrichtung (1) nach einem oder mehreren der vorhergehenden Ansprüche, **dadurch gekennzeichnet, dass** sie eine Vielzahl an Sortieranordnungen (5) und eine Vielzahl an Aufnahmeanordnungen (4) umfasst, die entlang der Ankunftsrichtung (A1) hintereinander angeordnet sind.

## Revendications

1. - Appareil (1) pour le tri d'articles manufacturés, comprenant :
- au moins un cadre de base (2) pour le support sur le sol ;
- au moins une ligne d'arrivée (3) associée audit cadre de base (2) et définissant une direction d'arrivée (A1) des articles manufacturés (M) à trier ;
- au moins un ensemble de réception (4) des articles manufacturés (M) disposé latéralement par rapport à ladite ligne d'arrivée (3) ;
- au moins un ensemble de tri (5) apte à saisir sélectivement lesdits articles manufacturés (M) à trier et à les transférer de ladite ligne d'arrivée (3) audit ensemble de réception (4) ;
- au moins une ligne de sortie (6) disposée au-dessous de ladite ligne d'arrivée (3) et définissant une direction de mouvement d'éloignement (A2) des articles manufacturés triés (M) ;
dans lequel ledit ensemble de réception (4) est apte à transférer les articles manufacturés (M) sur ladite ligne de sortie (6) ;
dans lequel :
- ladite ligne d'arrivée (3) et ladite ligne de sortie (6) sont sensiblement alignées verticalement l'une avec l'autre ; et par le fait que
- ledit ensemble de réception (4) comprend :
- au moins une structure d'empilement (11) définissant une direction inclinée d'empilement (I) ; et
- des moyens de support (12) desdits articles manufacturés (M) associés à ladite structure d'empilement (11) d'une manière mobile le long de ladite direction d'empilement (I) entre une position élevée et une position abaissée.

2. - Appareil (1) selon la revendication 1, **caractérisé par le fait que** ladite ligne d'arrivée (3) est sensiblement disposée à la même hauteur que celle occupée par lesdits moyens de support (12) dans ladite position élevée et **par le fait que** ladite ligne de sortie (6) est sensiblement disposée à la même hauteur que celle occupée par lesdits moyens de support (12) dans ladite position abaissée.

3. - Appareil (1) selon une ou plusieurs des revendications précédentes, **caractérisé par le fait que** ladite structure d'empilement (11) est développée, de haut en bas, à proximité desdites lignes d'arrivée et de sortie (3, 6).

4. - Appareil (1) selon une ou plusieurs des revendications précédentes, **caractérisé par le fait que** ladite direction d'arrivée (A1) et ladite direction de mouvement d'éloignement (A2) appartiennent à un plan allongé vertical (P) et **par le fait que** ladite direction d'empilement (I) est transversale audit plan allongé (P).

5. - Appareil (1) selon une ou plusieurs des revendications précédentes, **caractérisé par le fait que** lesdits moyens de support (12) comprennent :
- au moins une base de support (13) associée à ladite structure d'empilement (11) d'une manière mobile le long de ladite direction d'empilement (I) ; et
- au moins un élément de maintien (14) destiné à recevoir et à soutenir lesdits articles manufacturés (M) et verrouillé conjointement avec ladite base de support (13) le long de ladite direction d'empilement (I).

6. - Appareil (1) selon la revendication 5, **caractérisé par le fait que** ledit élément de maintien (14) est mobile par rapport à ladite base de support (13) le long d'une direction de travail (L) sensiblement horizontale.

7. - Appareil (1) selon la revendication 6, **caractérisé par le fait que** ledit élément de maintien (14) est apte à se déplacer, le long de ladite direction de travail (L), à l'opposé de ladite ligne de sortie (6) pendant le mouvement dudit élément de maintien (14) le long de ladite direction d'empilement (I) de la position élevée vers la position abaissée.

8. - Appareil (1) selon la revendication 6 ou 7, **caractérisé par le fait que** ledit élément de maintien (14) est mobile le long de ladite direction de travail (L) dans au moins une position de libération, dans laquelle il fait saillie à partir de ladite base de support (13), avec cette dernière dans la position abaissée, se chevauchant au moins partiellement avec ladite ligne de sortie (6).

9. - Appareil (1) selon une ou plusieurs des revendications précédentes, **caractérisé par le fait que** ledit ensemble de tri (5) comprend :
- au moins deux éléments de préhension (7) des articles manufacturés (M) à trier ; et
- des moyens de transfert (8) desdits éléments de préhension (7) aptes à déplacer ces derniers de manière alternée entre une position de préhension, dans laquelle ils sont alignés verticalement sur ladite ligne d'arrivée (3), et une position de libération, dans laquelle ils sont alignés verticalement sur ledit élément de maintien (14).

10. - Appareil (1) selon la revendication 9, **caractérisé par le fait que** lesdits moyens de transfert (8) comprennent au moins deux rails (9) disposés sensiblement parallèlement à ladite direction de travail (L), chacun desdits éléments de préhension (7) étant associé à un rail respectif (9) de manière coulissante entre ladite position de préhension et ladite position de libération.

11. - Appareil (1) selon une ou plusieurs des revendications précédentes, **caractérisé par le fait qu'**il comprend une pluralité desdits ensembles de tri (5) et une pluralité desdits ensembles de réception (4) disposés les uns à la suite des autres le long de ladite direction d'arrivée (A1).
